## Europäisches Patentamt

## European Patent Office

## Office européen des brevets

(19)

(11) Publication number: **0 117 075**
**B1**

(12)

# EUROPEAN PATENT SPECIFICATION

(45) Date of publication of patent specification: **01.04.87**

(51) Int. Cl.⁴: **C 03 B 9/40,** G 05 B 19/04

(21) Application number: **84300470.6**

(22) Date of filing: **26.01.84**

(54) Programmable control system for glassware forming machines.

(30) Priority: **26.01.83 US 461086**

(43) Date of publication of application:
**29.08.84 Bulletin 84/35**

(45) Publication of the grant of the patent:
**01.04.87 Bulletin 87/14**

(84) Designated Contracting States:
**DE FR GB IT**

(56) References cited:
**GB-A-2 022 870**
**GB-A-2 095 428**
**US-A-4 141 711**
**US-A-4 152 134**
**US-A-4 338 116**
**US-A-4 362 544**

(73) Proprietor: **EMHART INDUSTRIES, INC.**
**426 Colt Highway**
**Farmington Connecticut 06032 (US)**

(72) Inventor: **Japenga, Robert J.**
**9 Russell Lane**
**Simsbury Connecticut 06070 (US)**
Inventor: **Scott, Paul Fredrick**
**15 Fawn Drive**
**Granby Connecticut 06035 (US)**

(74) Representative: **Atkinson, Eric et al**
**Emhart Patents Department P.O. Box 88 Ross**
**Walk**
**Belgrave Leicester LE4 5BX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates generally to controllers for controlling the cyclical operation of a plurality of machine components. More specifically, the invention relates to computer based timing and control of the plurality of components in each section of a multi-section glassware forming machine.

Electronic timing or control systems are well known for the control of a plurality of components of a machine. In some machines the components are arranged in a plurality of identical sections, each operating independently of the others in predetermined phase relationship relative to the machine cycle. Prior art electronic control systems have controlled the operation of such sections as a unit and have consequently required use of a single central processing unit (CPU) or supervisory controller connected in hierarchical fashion to a plurality of section controllers. A disadvantage of such systems is that a malfunction of the central controller of the hierarchy prevents operation of any subordinate section controllers.

An example of a multi-section machine of this type is the well-known individual section (IS) glassware forming machine. Electronic timing systems for glassware-forming machines have been used for many years in place of mechanical, rotating timing drums. The old timing drums control the actuation of the various components within each section of the machine by actuating associated pneumatic valves with cams placed in circumferential grooves on the drum surface. Electronic timing systems replaced the rotating drum and cams with a solenoid actuated valve block (such as that disclosed in U.S. Patent No. 3 918 489) and control means for actuating selected valves at predetermined times in a predetermined sequence relative to a machine cycle reference point. One major advantage of electronic timing systems is the ease with which the timing settings of the various components may be adjusted during machine operation.

Some prior art IS machine electronic timing systems use timing pulse generators and counters to count pulses occurring during the machine cycle and compare the current count to preset counts to determine when each component or machine event should be actuated (for example, U.S. Patent No. 3 762 907). Other prior art electronic timing systems use similar count comparisons, but store the preset component timing settings (or machine events) in a core memory (for example, U.S. Patent No. 3 974 432). Each device disclosed in these two prior art patents serves to control actuation of all section components within the machine but does not provide for independent control of each section.

Programmable automatic machine controllers are also known in the prior art as shown in U.S. Re. No. 29 642. This controller, however, utilises a central machine console to couple data to and from each individual section memory unit, thus also preventing totally independent section operation. A similar centrally oriented system, but one incorporating feedback sensors and means for varying the duration of all events in response thereto, is shown in U.S. Patent No. 4 108 623.

Another type of programmable prior art controller is disclosed in U.S. Patent No. 4 152 134. This device is limited because it requires a central, machine supervisory computer to load control program and timing data into individual section computers. A malfunction in the machine supervisory computer would affect efficient operation of the sections of the machine. Further examples of this type of controller can be found in U.S. Patent No. 4 338 116 and U.K. Patent No. 2 095 428.

Yet another programmable controller is disclosed in U.S. Patent No. 4 247 317 which shows one way to store event timing data in a random access memory and means to alter same. This device uses a central console to control the relative timing of each section which effectively ties all section computer-memory controllers together into one hierarchical machine control system incapable of truly independent section operation.

U.K. Patent Specification No. 1 594 532, discloses a prior art electronic control system which utilises independent, asynchronous clock signals which are produced at a rate independent of the speed of the glassware forming machine. The system disclosed is also for the control of a machine rather than a section.

Other examples of electronic controllers using one computer to control all sections of a machine are disclosed in U.S. Patent No. 3 877 915 and Re. No. 29 188.

U.K. Patent GB—B—2 022 870 discloses a control system with one memory controller controlling each section of a machine. Even if this memory controller is implemented by a microcomputer (as is disclosed in the patent) the microcomputer merely emulates the memory controller's function and the necessary result is a simplistic cycling of the memory controller through a predetermined sequence of steps. There is no means disclosed for enabling modification of this predetermined sequence of steps at the section level in response to operator control. While the operator may adjust timing, there is no disclosure of means by which the operator could change the actual sequence of steps at the section level. Furthermore, the U.K. patent discloses a device necessitating a hierarchical computer or some other external type of loading mechanism for loading a control program. This is a limitation of the independence of the machine sections because they are dependent on an external loading device. Furthermore, this U.K. patent does not disclose means for controlling auxiliary machine functions.

All of the above prior art patents generally disclose a control system architecture comprising a "machine" controller and a plurality of subordinate "section" controllers. Such prior art devices therefore have the disadvantage of either requiring external devices to load control program data or of causing a shut down or inefficient operation of the entire machine in the event the main supervisory computer goes down.

Accordingly, there is a need for an individual section, independent programmable controller capable of independent control of each section of a machine. Such an independent structure would enable simultaneous operation of some or all sections of a machine and permit repairs of selected section controllers without affecting the operation of other sections or necessitating shutting down the entire machine.

The operation of prior art IS machines generally necessitates the operation of several desirable auxiliary or machine functions which are common to all sections although not required for the operation of any one section. Auxiliary function controls include, for example, controls for drive systems (controlling feeders, shears, gob distributors, conveyors, ware transfer devices, etc.), alarms (to signal warnings or malfunctions), shear spray (to lubricate and cool gob shears), cullet water and equipment, stackers (for lehr loading), surface coating equipment, etc. The operation of these auxiliary functions is somewhat related to the operation of the sections of the machine although each section can operate independently of the auxiliary functions.

Aforementioned U.S. Patent No. 4 152 134 discloses the auxiliary function of selective bottle rejection. However, the machine supervisory computer disclosed in that patent provides the necessary link between each individual section and the bottle reject device. A malfunction of the machine supervisory computer would sever this link for all sections, thus preventing operation of this or other auxiliary functions with any section. Additionally, similar disadvantages arise when peripheral data input/output devices (such as keyboards, tape storage units or alphanumeric displays) are interfaces with the several sections through a hierarchical control structure.

Accordingly, it is another object of this invention to provide a control system to enable individual section independent control while also enabling isolated data communication between selected independent section controllers and selected peripheral data input-output units including auxiliary function devices.

These objects are, according to the invention achieved by a control system for controlling the actuation of a plurality of components of each section of a machine in accordance with a predetermined control program and selected timing data, said machine including a plurality of said sections each independently operable in phased relationship within the cycle of operation of said machine, said system for enabling the simultaneous and independent operation of said plurality of sections, said system comprising

a plurality of local computermeans, each respectively associated with one of said sections,

a plurality of interface means each interposed respectively between one of said local computer means and its associated section for actuating the components of said section in accordancewith said predetermined control program and said selected timing data, and

terminal means, characterised in that each of said local computer means has non-volatile storage means containing said predetermined control program and for containing said selected timing data therein for controlling the operation of its respective section independently of any other one of said sections, that said terminal means are designed for the display of predetermined portions of said predetermined control program, for the display and entry of said selected timing data and for the display and entry of other timing data to replace chosen portions of said selected timing data, and that

bidirectional communications means are provided for selectively connecting said terminal means to a selected one of said local computer means.

Preferred embodiments of the invention are specified in the subclaims.

A preferred embodiment of the invention is described hereinafter in detail with reference to the accompanying drawings.

In the drawings:

Figure 1 shows a schematic block diagram of one embodiment of the invention installed for control of a multi-section glassware forming machine;

Figure 2 shows a more detailed schematic block diagram of a portion of Figure 1;

Figure 3 is a diagrammatic view of the local terminal shown in Figure 1;

Figure 4 is a diagrammatic view of the machine terminal shown in Figure 1;

Figure 5 is a more detailed schematic of the multiplexer shown in Figure 1;

Figure 6 shows a schematic block diagram of an embodiment of the invention utilising a global control terminal;

Figure 7 is a diagrammatic representation of three operator control panels.

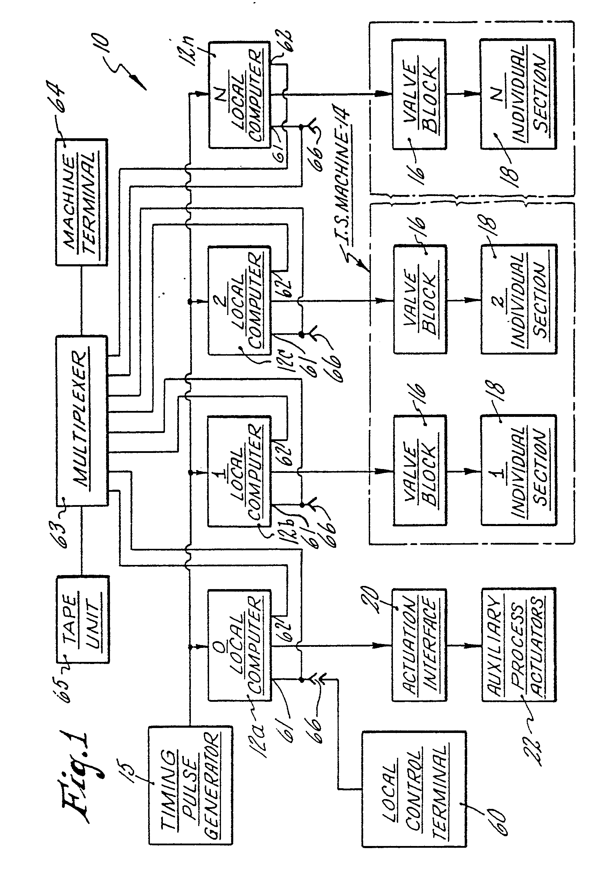

Referring now to Figure 1 there is shown a control system 10 comprising a plurality of independent, individual stand alone section controllers (SASCON) or local computers 12b—12n each one of which includes identical hardware components although being capable of containing unique software. Each local computer 12 is assigned to a different section of an n-section multi-section machine, for example, a glassware I.S. forming machine 14. Timing pulse generator 15 provides synchronising pulses to each local computer 12. The phased operation of each section is determined by the program within each local computer which basically offsets its respective starting point a predetermined amount from a synchronising pulse. As shown in Figure 1, a stand alone machine controller (SAMCON) or local computer "O" may be used to control auxiliary machine processes. In the case of a glassware forming machine these processes could be, for example, shear spray, cullet water and equipment, stacker, surface coating, alarms, drive systems for a feeder, shears, gob distributor conveyor, ware transfer devices etc. Local computer "O" is identical to all other local computers 12 from a hardware point of view and is therefore designated by the numeral 12a.

The output of each local computer 12 is connected to a valve block 16 which serves as the actuation interface for actuating the various valves associated with the plurality of mechanical components in each corresponding individual section 18. The output of local computer 12a for controlling all auxiliary machines processes is connected by an actuation interface 20 to various auxiliary process actuators 22. As stated before, a single local computer 12a may be used to control a plurality of auxiliary process actuators 22. For example, one actuator could be associated with a ware transfer device, another could be associated with a gob distributor, etc.

Each local computer 12 is further provided with two data communications ports: terminal port 61 and tape port 62. Each port 61 and 62 of each local computer 12 is connected to multiplexer 63 which is in turn connected to machine terminal 64 and tape unit 65. Plug 66 on each local computer 12 is a port to which a local or hand-held terminal 60 may be selectively connected. As will be discussed below, selected control data or timing setting data from any chosen local computer may be entered or displayed either at machine terminal 64 or hand-held terminal 60. If desired, several operators could control several sections simultaneously by each operator using his own hand-held terminal 60.

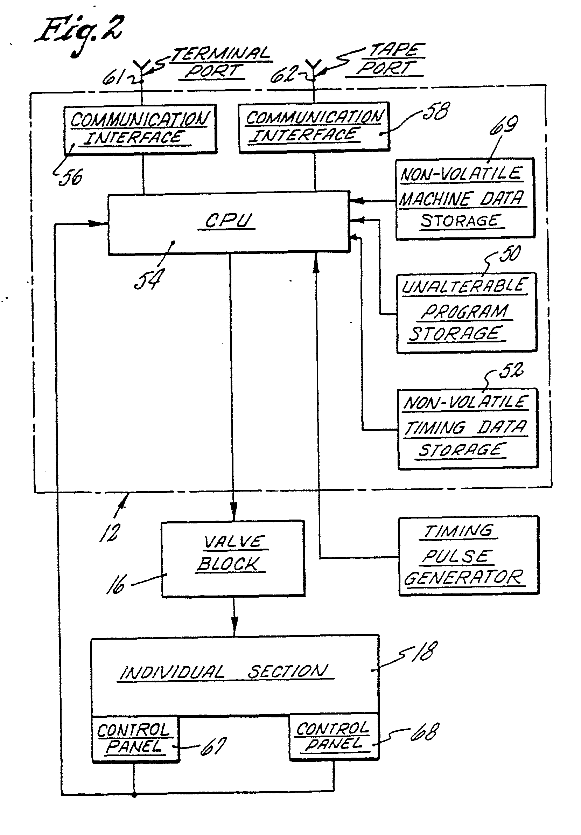

As shown in Figure 2, each local computer 12 includes a fixed, unalterable read only memory 50 and a non-volatile random access memory 52. In the preferred embodiment, ROM 50 comprises preprogrammed ROM chips (PROMs) for storing a predetermined control program to control the operation of each individual local computer 12 in accordance with timing settings or data which may be entered into RAM 52. Each local computer 12 may have different control programs stored in its ROM 50 depending on the function to be performed. For example, the control program stored in the local computer 12a associated with the auxiliary functions may be different from that stored in the local computers 12b—12n. The timing data in RAM 52 may be preprogrammed or may be entered by a machine operator through hand-held local terminal 60 or machine terminal 64. RAM 52 is non-volatile and may be connected to a battery back-up pack (not shown) to assure that the data in RAM 52 is not lost in the event of inadvertent power failure.

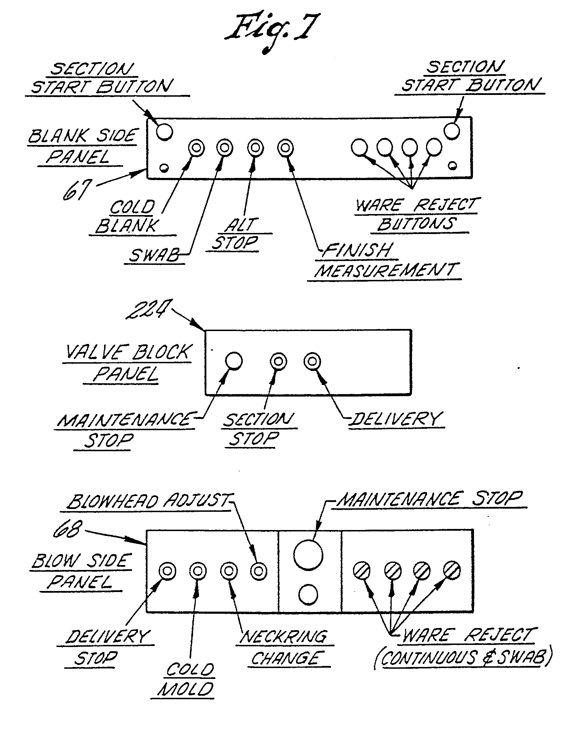

Each local computer 12 also includes a central processing unit 54 and data communications interfaces 56 and 58 interconnecting CPU 54 to local ports 61 and 62, respectively. While ports 61 and 62 are shown in Figure 1 as being connected to multiplexer 63 this is not necessary for the operation of the preferred embodiment. Since one advantage of the invention is its flexibility and interchangeability of components, all local computers 12 are identical from a hardware point of view and are, in practice, constructed with both ports 61 and 62. However, only port 61 and plug 66 need be used since data input and output can be accomplished through hand-held terminal 60. The machine terminal 64 is nevertheless used in the preferred embodiment to provide the operator with a convenient, centrally located access point for all sections. Each local computer 12 also includes a non-volatile random access memory 69 for storing machine data representative of the particular machine with which the respective section of the local computer 12 is associated. Machine data may be considered superimposed on timing setting data and depends on the particular installation and user and may be, for example, data specific to the operation of a particular machine such as the number of sections, number of gobs or other peculiarities of machine operations. Machine data also includes set-up data such as assigning particular actuator valves to specific computer output drivers. The invention thus permits the flexibility to assign different drivers to different valves in the event any driven output becomes defective. Local control panels 67 and 68 are mounted on each individual section 18, one on the blank side of the machine and one on the blow side. Each control panel provides local operator control of various functions as is explained below with reference to Figure 7.

In one preferred embodiment each local computer 12 was chosen to be a Z-80 microcomputer with a 20K ROM, a 2K non-volatile timing data and media storage and a 1K RAM.

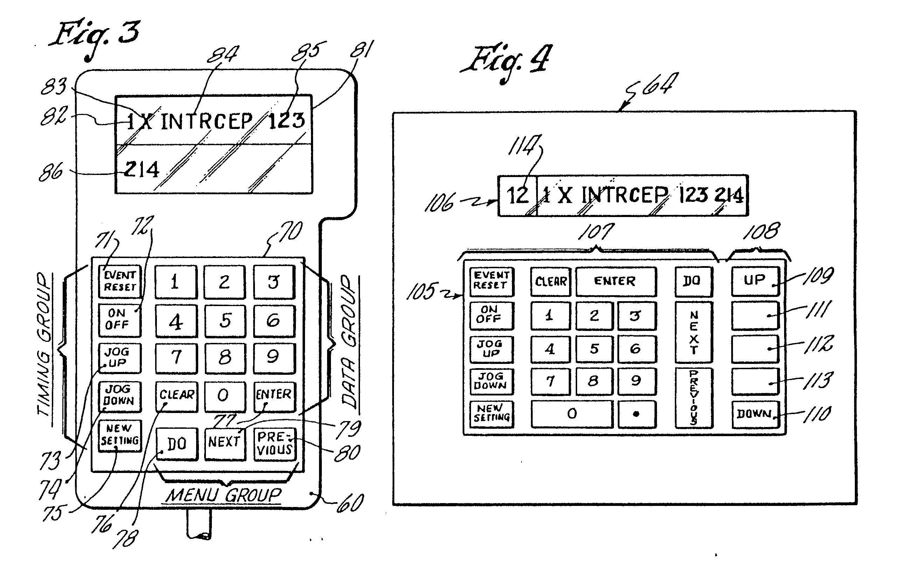

An example of a portable, hand-held local computer terminal 60 is shown in Figure 3. The basic structure of such a local terminal is a conventional unit available from many sources although the invention includes the unique functions to which the various keys are assigned. The particular local terminal 60 shown in Figure 3 includes keypad 70 having three groups of keys: the timing group comprising functions keys 71—75; the data entry group comprising the digits and keys 76 and 77; and the menu group comprising keys 78—80. Terminal 60 also includes LED display 81 (two rows, sixteen characters each).

A sample display on local terminal 60 is shown in Figure 3 to include character groups 82—86. Group 82 represents the number of the event chosen by the operator for display. Group 83 comprises either an "X" or an "O" to indicate whether the "off" timing setting or the "on" timing setting, respectively, will be changed by the entry of data. The operator may alternatively select either one of these characters by using key 72. Group 84 represents the name of the event (either in full or abbreviated form). This name appears automatically as a function of the number of the event identified by group 82. Group 85 represents the "on" time in degrees at which the particular event is actuated. Similarly, group 86 represents the "off" time at which the event is deactivated. The "on" and "off" times are automatically displayed to represent the then current values associated with the particular chosen event. Depending upon the character represented in groups 83, keys 73 and 74 will either incrementally increase or decrease the "on" or "off" times accordingly. If a totally new timing setting is desired such that incremental changes would be too time consuming, key 75 may be depressed to enable the entry of a new timing value by depressing the selected digits and enter key 77.

The control program for controlling is menu driven and is accessible to the operator by use of the menu group of keys 78—80. Access to the control program is made at predetermined points in the program to enable operator entry of various instructions, machine setting data or timing setting data. The key arrangement on terminal 60 is advantageous because it permits the functionality of the control system to be independent of the hardware. That is, the software control program may be changed while still enabling use of the same hardware. The menu driven software of the control program is traversed using the menu group of keys. Once a particular request drawing instruction is presented on display 81, the "do" key 78 will enable the operator to access the corresponding submenu, if any, by executing the menu item in the display. This procedure continues until the software gets to a terminal mode at which the particular menu item displayed will be performed (e.g. timing setting data will be entered). The next and previous keys 79 and 80 enable quick access to menu items. The next key 78 causes the display to cycle through the predetermined menu list in order to prompt the operator to access menu items in a predetermined order to enhance system control.

Terminals 60 or 64 may be used to enter or display timing setting data or machine data in memories 52 and 69, respectively. For example, the various events utilised in sequence to form an article of glassware (as described in U.S. Patent No. 3 877 915) and their corresponding timing settings may be entered, changed and displayed by activation of the various function keys in keypad 70.

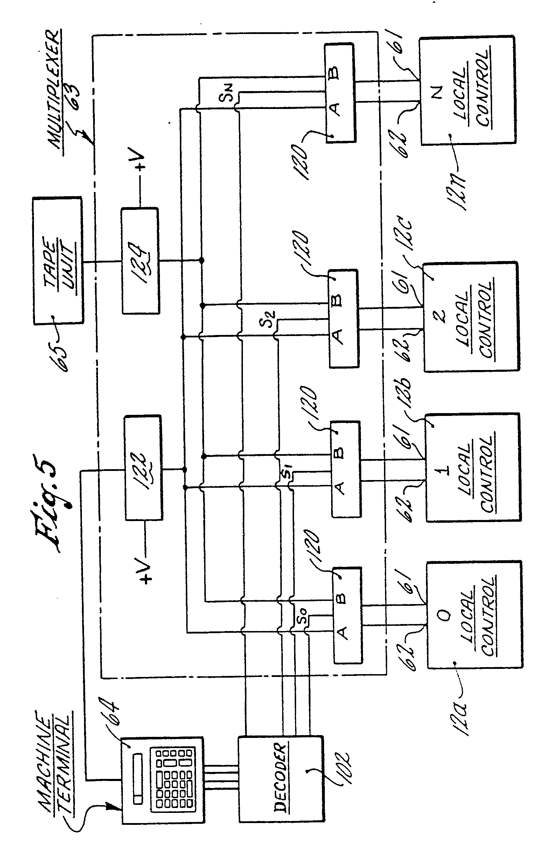

A more detailed diagrammatic view of machine terminal 64 having a keyboard 105 and display 106 is shown in Figure 4. The keyboard and display of machine terminal 64 provide the same input/output capability as hand-held terminal 60 and further provide additional capabilities to enable the machine operator to input or output data for a selected section from a central location while not interfering with the totally independent operation of each machine section. Keyboard 105 includes a portion 107 functionally similar to keypad 70 of hand-held terminal 60 and a portion 108 unique to machine terminal 64. Portion 108 includes function keys 109 and 110 for selecting "section up" or "section down," respectively in order to enable the operator to choose a section number and increment or decrement that number to get data access to another section. "Event fill" key 111 enables timing data from any selected local computer 12 to be temporarily stored in a temporary data storage (not shown) and to be loaded therefrom into another selected local computer 12, thus facilitating duplication of timing setting data in the several local computers 12 without the necessity of entering data into each one separately. In the prior art systems developed and sold by the Applicants a similar function was performed by transferring data from one portion of a single memory to another portion of the same memory. The fill function may also be accomplished in the embodiment shown in Figure 1 by the addition of a microcomputer (not shown) between all local computers 12 and multiplexer 63. Keys 112 and 113 may be assigned other desired functions which are not enumerated herein.

Display 106 is, in one embodiment, a one line, twenty character display. A representative display is shown in Figure 4 as being identical to the display shown on the hand-held terminal in Figure 3 with an additional character group 114 showing the number of the section to which the remaining characters pertain at any one time.

Referring now to Figure 5 there is shown a more detailed schematic of the multiplexer 63 in the preferred embodiment shown in Figure 1. Data entered from keyboard 105 provides binary parallel inputs to decoder 102 (actually part of 64). In response to a unique binary input, decoder 102 activates a selected one of its output $S_0$ to $S_N$, each of which is connected respectively to the enabling terminal of a bidirectional communications gate 120. Gate 120 may be, for example, an RS422 dual input chip with tristate enable. The input terminals A and B of each gate 120 are connected respectively to the output of RS422 bidirectional gates 122 and 124. The enabling terminals of each of these gates 122 and 124 are connected so as to be continuously activated to enable data transfer between gates 122 and 124 and selected gates 120 whenever the associated enabling signals $S_0$ to $S_N$ is activated. In the preferred embodiment shown, gate 122 provides an interface to machine terminal 64 and gate 124 provides an interface to external archive tape storage unit 65.

In operation, only one output of decoder 102 will be activated at any one time in order to enable data transfer between a particular selected section (represented by the unique input code to the decoder) and the input/output device connected to the data terminals of the gate 120 associated with that section. For example, if the $S_1$ output of decoder 102 is activated local computer 12b for section 1 will have its communication ports 61 and 62 connected to terminal 64 and tape unit 65. This will enable local computer 12b to accept data from keyboard 105 or tape (as may be required by the control program) and will enable data from the selected local computer to be displayed on display 106. If the preprogrammed control program within the selected local computer 12b requires data transfer between it and tape unit 65 then appropriate data transfer will occur.

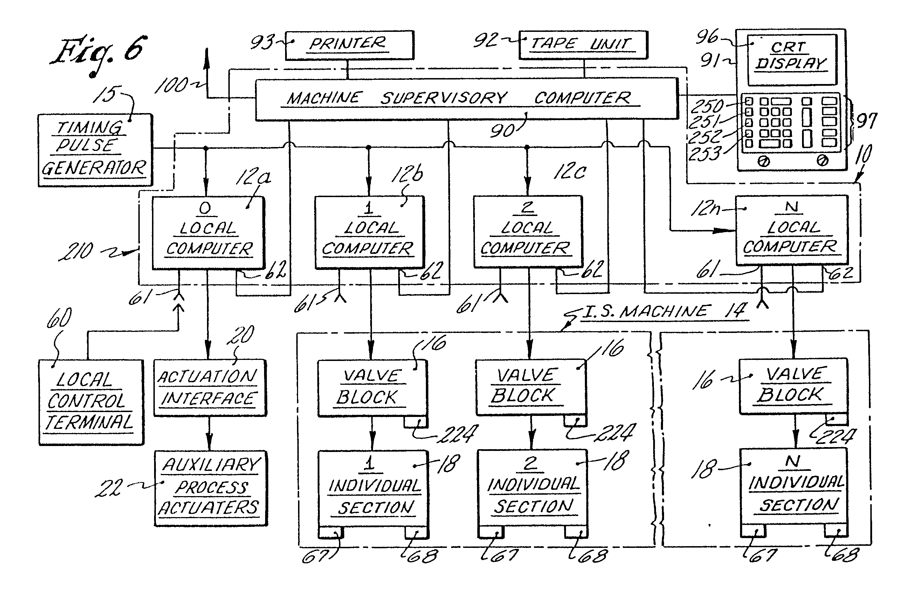

Referring now to Figure 6 there is shown an embodiment of the invention utilising a machine supervisory computer 90 connected to communication port 62 of each local computer 12. Computer 90 facilitates operation of the glassware forming machine while still enabling totally independent operation of all individual sections and their respective local computers. Computer 90 includes a bidirectional communications interface (not shown) for interconnecting selected ones of the local computers 12 to selected input/output units connected to computer 90 such as global terminal 91, tape unit 92 and printer 93. Other peripheral I/O units may obviously be used.

Global terminal 91 includes cathode ray tube display 96 and keyboard 97. It will be noted that the global terminal keyboard is similar to the machine terminal keyboard shown in Figure 4. Indeed, global terminal 91 is similar in function to machine terminal 64, the primary difference being the inclusion of CRT display 96 in the former. Display 96 obviously enables the presentation of more data to the operator so that he may, for example, compare the timing settings of all sections simultaneously.

In the preferred embodiment the local and machine supervisory computers may be housed in forming control enclosure 210. Enclosure 210 may be, for example, an environment-proof enclosure complying with NEMA 12 requirements and may be situated at a convenient distance from the IS machine 14. Each local computer is identical from a hardware point of view and is a modular unit rack mounted within enclosure 210 for easy replacement if necessary. Each valve block 16 is provided with a control panel 224 and each individual section 18 is provided with a blank side control panel 67 and a blow side control panel 68. The blank and blow panels provide local plugs (not shown) by which handheld terminal 60 may be connected to any selected section, from either the blank or blow side of the machine, and its associated local computer. The panels also provide the machine operator with local access to control functions such as start, emergency stop, ware reject, etc.

Machine supervisory computer 90 provides the means to interface selected ones of local computers 12 to I/O devices such as tape unit 92 or printer 93. Tape unit 92 may be used to store control program data to be loaded into computer 90 to control its operation. Note that the control program stored in tape unit 92 is not the same as control program data stores in the individual local computers 12. The latter control programs are always stored in ROM within each local computer. The control program stored in tape unit 92 is used only to control the operation of computer 90 and does not inhibit in any way the independent operation of each local computer and its corresponding section.

It will be noted that machine supervisory computer 90 may provide access to all timing setting data within system 10. Hard copy printouts of any selected data may be obtained through printer 93. Computer 90 may also be provided with an output data channel 100 for providing selected data to external data processing equipment (not shown). Global terminal 91, tape storage unit 92, printer 93 or other peripheral units (not shown) may be connected to computer 90 and situated in a convenient location either adjacent machine 14 or in a remote control room.

In one embodiment machine supervisory computer 90 may be, for example, an LSI-11 minicomputer available from Digital Equipment Corporation. The particular LSI-11 used in this embodiment has a 256K RAM for temporary data storage to facilitate data transfer between selected local computers and peripheral units connected to computer 90. By reference to Figures 2 and 6 it will be noted that data communications between computer 90 and selected local computer 12 may occur through port 62 and associated communication interface 58. It is thus apparent that communications may occur directly between CPU 54 of the selected local computer and the central processing unit included in the LSI-11. As shown in Figure 6 handheld terminal 60 may be connected to port 61 of a chosen local computer to provide parallel communications if desired. In any event, since each local computer 12 is provided with its own unalterable program storage means 50 as well as non-volatile timing and machine data storage means 62 and 66, respectively, each local computer 12 may operate independently of any other and independently of computer 90. Contrary to prior art control systems for glassware forming machines, no loading or control program data into local computers 12 is necessary to permit their operation.

Terminal 91 may include coded access key slots 250—253. Each key slot will accept only a predetermined key or code. The control program for computer 90 is written so that control and display of various data is limited to authorised personnel according to a chosen hierarchy in the glass plant. A four level access hierarchy arranging from lowest to highest may be, for example, operator, set-up crew, product management and equipment maintenance.

Operation of system 10 and access to various timing and control data within the system is a function of the particular key slot which may be activated. For example, a machine operator may operate the machine and all of its sections by inserting the proper key into slot 250 corresponding to the lowest access level (level 1). The operator may thus control display and entry of only the timing and control data necessary to perform his work and may make certain limited changes to timing setting data and the like. The operator would be prevented from accessing or making changes to other data. A set-up crew may be given a key for slot 251 and thus permitted display and entry access to all of the data available to the operator plus some additional selected data such as machine data necessary to set-up the system for operation on a particular machine (i.e. access level 2). Additional data access is similarly available by providing keys to slots 252 (level 3) and 254 (level 4) to those individuals needing access to such levels. Such a system prevents, for example, an operator from changing data beyond the scope necessary to perform his work or from obtaining access to sensitive production data.

Referring now to Figure 7 the operator controls available on each valve block 224, overhead or blank side panel 67 and blow side panel 68 are shown in more detail. Each section is provided with the same operator controls for performing the functions of basic section control, adjustment cycle selection and operator aids.

The basic section controls available to the operator are section start (available only on panel 67), normal stop to a preprogrammed position (available on panels 224 and 68), alternate stop to another preprogrammed position (available on panel 67), delivery start and stop (available on panels 224 and 68 respectively) and maintenance or emergency stop (available on panels 224 and 228).

There are adjustment cycles also available to enable the operator to cause the control system to perform a predetermined sequence of steps in order to accomplish certain features. For example, blow side panel 68 is provided with a "neckring change" control in order to position the section for easy alignment and changing of neckrings, "blowhead adjust" control for adjusting the blowhead. Black side panel 67 is provided with a "finish measurement" control for determining the height of the bottle's finish above the mould.

Various operator aid controls are also available in order to assist the operator in performing various duties which heretofore had to be manually performed. For example, blank side panel 67 is provided with a swab control to initiate a swab cycle to automatically position the particular section's blank side for efficient swabbing. Similarly, panels 67 and 68 are provided with "cold blank" and "cold mould" controls for altering the sections cycle for efficient heating of blank and blow moulds respectively during start up or after mould change. Ware rejects controls are provided to assist the operator in automatically rejecting selected glassware. These controls are available from either the blank side or the blow side in order for the operator to be able to reject ware produced by either side. Four reject buttons are provided on each panel 67 and 68, one each for each mould within each section. (Note that the panels shown here are designed for a "quad-gob" system having four moulds in each section of the machine.) Blank side panel 67 is provided with ware reject buttons enabling the rejection of bottles currently produced in the respective blank side moulds such as, for example, during start up of the section. Blow side panel 68 is provided with ware reject buttons capable of either continuous rejection of bottles produced by selected blow moulds or rejection of a predetermined number of bottles such as, for example, after swabbing. The control system may also be programmed to automatically select the ware reject function after activation of either "cold blanks", "cold moulds", or "swab" controls.

**Claims**

1. A control system for controlling the actuation of a plurality of components of each section (18) of a machine in accordance with a predetermined control program and selected timing data, said machine including a plurality of said sections each independently operable in phased relationship within the cycle of operation of said machine, said system for enabling the simultaneous and independent operation of said plurality of sections, said system comprising
a plurality of local computer means (12b—12n), each respectively associated with one of said sections,
a plurality of interface means (16), each interposed respectively between one of said local computer means and its associated section for actuating the components of said section in accordance with said predetermined control program and said selected timing data,
terminal means (60, 64), characterised in that each of said local computer means has non-volatile storage means (50, 52) containing said predetermined control program and for containing said selected timing data therein for controlling the operation of its respective section independently of any other one of said sections, that said terminal means are designed for the display of predetermined portions of said predetermined control program, for the display and entry of said selected timing data and for the display and entry of other timing data to replace chosen portions of said selected timing data, and that
bidirectional communications means (61) are provided for selectively connecting said terminal means to a selected one of said local computer means.

2. A control system in accordance with claim 1, characterised in that:
the control system further comprises storage means for storing predetermined timing data; and
means (111) operatively connecting said timing data storage means (52) to said bidirectional communication means (61) for enabling timing data transfer therebetween.

3. A control system in accordance with claim 1 or claim 2, characterised in that said non-volatile storage means (50) for storing said predetermined control program is an unalterable storage means.

4. A control system in accordance with any one of claims 1 to 3, characterised in that said terminal means (60, 64) further comprises:

display means (81, 106) for presenting to an operator pursuant to said predetermined control program at leastone of a plurality of predetermined programmed requests for instruction or data input for prompting said operator to input an appropriate instruction or data at a predetermined point in said predetermined control program; and

keyboard means (70, 105) for entering into said local computer means instructions or data in response to said requests.

5. A control system in accordance with claim 4 characterised in that said keyboard means comprises:

a group of various data keys (76, 77) for entering numerical data;

a group of various timing keys (71—75) for entering predetermined changes to the timing data displayed on said display means;

a group of various menu keys (78—80) for enabling the operator to access selected portions of said control program.

6. A control system according to any one of claims 1 to 5, characterised in that the system also comprises:

a global terminal means (91) operatively connected to a machine supervisory computer (90) means; and

a machine supervisory computer means (90) operatively connected to said local computer means (12b—12n) and said global terminal means (91) for selectively connecting said global terminal means to a selected one of said local computer means, said machine supervisory computer not inhibiting the independent operation of said plurality of sections.

7. A control system in accordance with any one of claims 1 to 6, characterised in that the terminal means (60, 64) comprises:

at least one local terminal means (60) for being operatively connected to a selected one of said local computer means (12b—12n).

8. A control system in accordance with claim 6, characterised in that the system also comprises:

first storage means (92) for storing first predetermined control data for controlling the operation of said machine supervisory computer (90); and

means for loading said first predetermined control data into said machine supervisory computer.

9. A control system in accordance with any one of claims 1 to 6, characterised in that the system further comprises means (111) for transferring selected timing setting data from one of said local computer means (12b—12n) to another of said local computer means.

10. A control system in accordance with any one of claims 1 to 9, characterised in that said local computer means (12b—12n) further comprises:

a non-volatile machine data storage means (69) for storing data representative of said machine.

11. A control system in accordance with claim 10, characterised in that the system further comprises:

means for transferring machine data from one of said local computer means to another of said local computer means.

12. A control system in accordance with any one of claims 1 to 11, characterised in that the system also comprises:

access code means (250—253) for enabling access to selected data only upon entry of a predetermined identifying code, each identifying code being associated with predetermined portions of said selected data.

13. A control system according to any one of claims 1 to 12, characterised in that said system is also for controlling the actuation of a plurality of components associated with machine functions common to all of said sections (18) and further comprises:

a machine computer means (12a) associated with said machine, said machine computer means having second non-volatile storage means containing a second predetermined control program and for containing second selected timing data therein for controlling the operation of at least one of said machine functions independently of any of said sections;

at least one machine interface means (20) interposed between said machine computer means and a corresponding one of said machine function components for actuating said machine function components in accordance with said second predetermined control program and said second selected timing data;

terminal means (60, 64) for the display of predetermined portions of said first and second predetermined control programs, for the display and entry of said first and second selected timing data and for the display and entry of other timing data to replace chosen portions of said first and second selected timing data; and

bidirectional communications means (61) for selectively connecting said terminal means to a selected one of said local computer means or machine computer means.

**Patentansprüche**

1. Steuersystem zum Steuern der Betätigung einer Vielzahl von Bestandteilen·eines jeden Abschnitts (18) einer Maschine entsprechend einem vorbestimmten Steuerprogramm und gewählten Zeitsteuerdaten, wobei die Maschine eine Vielzahl dieser Abschnitte aufweist, die in zeitlicher Abstimmung innerhalb des Arbeitszyklus der Maschine unabhängig voneinander betätigbar sind und das System ein gleichzeitiges und unabhängiges Arbeiten der Vielzahl von Abschnitten erlauben soll, mit einer Vielzahl jeweils einem der Abschnitte zugeordneter lokaler Rechnereinrichtungen (12b—12n), mit einer Vielzahl von Schnittstellen (16), die jeweils zwischen einer der lokalen Rechnereinrichtungen und dem zugehörigen Abschnitt angeordnet sind, um die Bestandteile des Abschnitts entsprechend dem vorbestimmten Steuerprogramm und den gewählten Zeitsteuerdaten zu betätigen, und mit Endeinrichtungen (60, 64), dadurch gekennzeichnet, daß jeder lokalen Rechnereinrichtungen jeweils mit nichtflüchtigen Speichern (50, 52) versehen ist, die das vorbestimmte Steuerprogramm enthalten und die gewählten Zeitsteuerdaten aufnehmen, um den Betrieb des zugehörigen Abschnitts unabhängig von allen anderen Abschnitten zu steuern, daß die Endeinrichtungen zur Sichtanzeige vorbestimmter Teile des vorbestimmten Steuerprogramms, zur Sichtanzeige und zur Eingabe der gewählten Zeitsteuerdaten sowie zur Sichtanzeige und Eingabe anderer Zeitsteuerdaten als Ersatz bestimmter Teile der gewählten Zeitsteuerdaten ausgeführt sind, und daß eine bidirektionale Übertragungseinrichtung (61) vorgesehen ist, welche die Endeinrichtungen wahlweise mit einer der lokalen Rechnereinrichtungen verbindet.

2. Steuersystem nach Anspruch 1, gekennzeichnet durch eine Speichereinrichtung zum Speichern vorbestimmter Zeitsteuerdaten und durch eine Einrichtung (111), die im Betrieb die Speichereinrichtung (52) für die Zeitsteuerdaten mit der bidirektionalen Übertragungseinrichtung (61) verbindet, um die Übertragung von Zeitsteuerdaten zwischen ihnen zu gestatten.

3. Steuersystem nach Anspruch 1 oder 2, dadurch gekennzeichnet, daß die nichtflüchtige Speichereinrichtung (50) zum Speichern des vorbestimmten Steuerprogramms eine nichtänderbare Speichereinrichtung ist.

4. Steuersystem nach einem der Ansprüche 1 bis 3, dadurch gekennzeichnet, daß die Endeinrichtungen (60, 64) eine Sichteinheit (81, 106), die einer Bedienungsperson entsprechend dem Steuerprogramm mindestens eine einer Vielzahl von vorbestimmten programmierten Aufforderungen zur Befehls- oder Dateneingabe ausgibt und sie so veranlaßt, an einem vorbestimmten Punkt im vorbestimmten Steuerprogramm einen entsprechenden Befehl oder Daten einzugeben, und eine Tastatur (70, 105) aufweisen, um ansprechend auf die Aufforderung Befehle oder Daten in die lokalen Rechneinrichtungen einzugeben.

5. Steuersystem nach Anspruch 4, dadurch gekennzeichnet, daß die Tastatur eine Gruppe unterschiedlicher Datentasten (76, 77) zur Eingabe numerischer Daten, eine Gruppe unterschiedlicher Zeitsteuertasten (71—75) zur Eingabe vorbestimmter Änderungen an den auf der Sichteinheit angezeigten Zeitsteuerdaten sowie eine Gruppe unterschiedlicher Menütasten (78—80) aufweist, welche der Bedienungsperson den Zugriff auf gewählte Teile des Steuerprogramms gestatten.

6. Steuersystem nach einem der Ansprüche 1 bis 5, dadurch gekennzeichnet, daß eine mit einer maschinenüberwachenden Rechnereinrichtung (90) verbundene globale Endeinheit (91) sowie eine maschinenüberwachende Rechnereinrichtung (90) aufweist, die betrieblich mit den lokalen Rechnereinrichtungen (12b—12n) und mit der globalen Endeinheit (91) verbunden ist, um die globale Endeinheit wahlweise mit einer gewählten der lokalen Rechnereinrichtungen zu verbinden, wobei der maschinenüberwachende Rechner den unabhängigen Betrieb der Vielzahl von Abschnitten nicht stört.

7. Steuersystem nach einem der Ansprüche 1 bis 6, dadurch gekennzeichnet, daß die Endeinrichtung (60, 64) mindestens eine lokale Endeinheit (60) umfaßt, die betrieblich mit einer gewählten der lokalen Rechnereinrichtungen (12b—12n) verbindbar ist.

8. Steuersystem nach Anspruch 6, dadurch gekennzeichnet, daß eine erste Speichereinrichtung (92) zum Speichern erster vorbestimmter Steuerdaten zum Steuern des Betriebs des maschinenüberwachenden Rechners (90) sowie eine Einrichtung aufweist, um die vorbestimmten ersten Steuerdaten in den maschinenüberwachenden Rechner zu laden.

9. Steuersystem nach einem der Ansprüche 1 bis 6, dadurch gekennzeichnet, daß eine Einrichtung (111) vorgesehen ist, um gewählte Zeitsteuer-Einstelldaten von einer der lokalen Rechnereinrichtungen (12b—12n) an eine andere lokale Rechnereinrichtung zu übertragen.

10. Steuersystem nach einem der Ansprüche 1 bis 9, dadurch gekennzeichnet, daß die lokalen Rechnereinrichtungen (12b—12n) eine nichtflüchtige Speichereinrichtung (69) zur Aufnahme von für die Maschine repräsentativen Daten aufweisen.

11. Steuersystem nach Anspruch 10, dadurch gekennzeichnet, daß die Steuerung weiterhin Mittel aufweist, um Maschinendaten von einer der lokalen Rechnereinrichtungen an eine andere der lokalen Rechnereinrichtungen zu übertragen.

12. Steuersystem nach einem der Ansprüche 1 bis 11, dadurch gekennzeichnet, daß das System weiterhin eine Zugriffskodeeinrichtung (250—254) aufweist, die den Zugang zu gewählten Daten nur nach Eingabe eines vorbestimmten Identifikationskodes erlaubt, wobei jeder Identifikationskode bestimmten Teilen der gewählten Daten zugeordnet ist.

13. Steuersystem nach einem der Ansprüche 1 bis 12, dadurch gekennzeichnet, daß es auch zum Betätigen einer Vielzahl von Bestandteilen dient, die allen Abschnitten (18) gemeinsamen Maschinenfunktionen zugeordnet sind, daß es eine der Maschine zugeordnete Maschinenrechnereinrichtung (12a) mit einer zweiten nichtflüchtigen Speichereinrichtung umfaßt, die ein zweites vorbestimmtes Steuerprogramm enthält und zweite gewählte Zeitsteuerdaten zum Steuern des Betriebs mindestens einer der Maschinenfunktionen unabhängig von allen anderen Abschnitten aufnehmen kann, daß mindestens eine Maschinenrechnereinrichtung und einem entsprechenden Funktionsbestandteil der Maschine zum Betätigen der Maschinenfunktionsteile entsprechend dem zweiten vorbestimmten Steuerprogramm und den zweiten gewählten Zeitsteuerdaten vorgesehen ist, daß Endeinrichtungen (60, 64) zur Sichtanzeige vorbestimmter Abschnitte des ersten und des zweiten Steuerprogramms, zur Sichtanzeige und Eingabe der ersten und zweiten gewählten Zeitsteuerdaten und zur Sichtanzeige und Eingabe anderer Zeitsteuerdaten als Ersatz gewählter Teile der ersten und zweiten gewählten Zeitsteuerdaten vorgesehen sind und daß eine bidirektionale Übertragungseinrichtung (61) zum wahlweisen Verbinden der Endeinrichtungen mit einer gewählten lokalen Rechnereinrichtung oder der Maschinenrechnereinrichtung angeordnet ist.

## Revendications

1. Système de commande destiné à commander l'actionnement de plusieurs composants de chaque section (18) d'une machine selon un programme de commande prédéterminé et des données de temporisation sélectionnées, ladite machine comportant plusieurs desdites sections pouvant fonctionner indépendamment en relation de phases dans le cycle de fonctionnement de ladite machine, ledit système autorisant le fonctionnement simultané et indépendant desdites plusieurs sections, ledit système comportant: plusieurs ordinateurs locaux (12b—12n) associés chacun respectivement avec l'une desdites sections, plusieurs dispositifs d'interface (16) intercalés chacun respectivement entre l'un desdits ordinateurs locaux et sa section associée pour actionner les composants de ladite section en fonction dudit programme de commande prédéterminé et desdites données de temporisation sélectionnées, et un dispositif terminal (60, 64), caractérisé en ce que chacun desdits ordinateurs locaux comporte un dispositif de mémorisation non volatile (50, 52) contenant ledit programme de commande prédéterminé et pour contenir lesdites données de temporisation sélectionnées destinées à commander le fonctionnement de sa section respective indépendamment de toute autre desdites sections, en ce que ledit terminal est réalisé de manière que l'affichage de parties prédéterminées dudit programme de commande prédéterminé, l'affichage et l'entrée desdites données de temporisation sélectionnées et l'affichage et l'entrée d'autres données de temporisation remplacent des parties choisies desdites données de temporisation sélectionnées et en ce qu'un dispositif de transmission bidirectionnelle (61) est prévu pour connecter sélectivement ledit terminal à l'un sélectionné desdits ordinateurs locaux.

2. Système de commande selon la revendication 1, caractérisé en ce que: le système de commande comporte en outre un dispositif de mémorisation destiné à mémoriser des données de temporisation prédéterminées, et un dispositif (111) connectant en fonctionnement ledit dispositif de mémorisation de données de temporisation (52) audit dispositif de transmission bidirectionnelle (61) pour établir entre eux un transfert de données de temporisation.

3. Système de commande selon la revendication 1 ou la revendication 2, caractérisé en ce que ledit dispositif de mémorisation non volatile (50) destiné à mémoriser ledit programme de commande prédéterminé est un dispositif de mémorisation non alterable.

4. Système de commande selon l'une quelconque des revendications 1 à 3, caractérisé en ce que ledit terminal (60, 64) comporte en outre un dispositif de visualisation (81, 106) destiné à présenter à un opérateur responsable dudit programme de commande prédéterminé au moins l'une de plusieurs demande programmées prédéterminées pour une instruction ou une entrée de données afin d'avertir ledit opérateur d'introduire une instruction ou des données appropriées en un point prédéterminé dudit programme de commande prédéterminé, et un clavier (70, 105) destiné à introduire dans ledit ordinateur local des instructions ou des données en réponse auxdites demandes.

5. Système de commande selon la revendication 4, caractérisé en ce que ledit clavier comporte: un groupe de diverses touches de données (76, 77) pour introduire des données numériques; un groupe de diverses touches de temporisation (71—75) pour introduire des modifications prédéterminées des données de temporisation visualisées sur ledit dispositif d'affichage; un groupe de diverses touches de programme (78, 80) pour autoriser l'opérateur à accèder à des parties sélectionnées dudit programme de commande.

6. Système de commande selon l'une quelconque des revendications 1 à 5, caractérisé en ce qu'il comporte également; un terminal global (91) connecté en fonctionnement à un ordinateur de supervision de machine (90); et un ordinateur de supervision de machine (90) connecté en fonctionnement avec lesdits ordinateurs locaux (12b—12n) et ledit terminal global (91) pour connecter sélectivement ledit terminal global à l'un sélectionnée desdits ordinateurs locaux, ledit ordinateur de supervision de machine ne perturbant pas le fonctionnement indépendant desdites plusieurs sections.

7. Système de commande selon l'une quelconque des revendications 1 à 6, caractérisé en ce que le terminal (60, 64) comporte: au moins un terminal local (60) destiné à être connecté en fonctionnement à l'un sélectionné desdits ordinateurs locaux (12b—12n).

8. Système de commande selon la revendication 6, caractérisé en ce qu'il comporte également: un premier dispositif de mémorisation (92) destiné à mémoriser des premières données de commande prédéterminées pour commander le fonctionnement dudit ordinateur de supervision de machine (90); et un dispositif pour charger lesdites données de commande prédéterminées dans ledit ordinateur de supervision de machine.

9. Système de commande selon l'une quelconque des revendications 1 à 6, caractérisé en ce qu'il comporte en outre un dispositif (111) pour transférer des données sélectionnées de réglage de temporisation de l'un desdits ordinateurs locaux (12b—12n) à un autre desdits ordinateurs locaux.

10. Système de commande selon l'une quelconque des revendications 1 à 9, caractérisé en ce que lesdits ordinateurs locaux (12b—12n) comportent en outre: un dispositif de mémorisation de données de machine non volatile (69) destiné à mémoriser des données représentant ladite machine.

11. Système de commande selon la revendication 10, caractérisé en ce qu'il comporte en outre: un dispositif destiné à transférer des données de machine de l'un desdits ordinateurs locaux vers un autre desdits ordinateurs locaux.

12. Système de commande selon l'une quelconque des revendications 1 à 11, caractérisé en ce qu'il comporte également: un dispositif de code d'accès (250—253) destiné à autoriser l'accès à des données sélectionnées, seulement à l'introduction d'un code d'identification prédéterminé, chaque code d'identification étant associé avec des parties prédéterminées desdites données sélectionnées.

13. Système de commande selon l'une quelconque des revendications 1 à 12, caractérisé en ce qu'il commande également l'actionnement de plusieurs composants associé avec des fonctions de machine communes à toutes lesdites sections (18) et comporte en outre: un ordinateur de machine (12a) associé avec ladite machine, ledit ordinateur de machine comportant un second dispositif de mémorisation non volatile contenant un second programme de commande prédéterminé et pour contenir des secondes données de temporisation sélectionées afin de commander le fonctionnement d'au moins l'une desdites fonctions de machine indépendamment de l'une desdites sections; au moins un dispositif d'interface de machine (20) intercalé entre ledit ordinateur de machine et l'un correspondant desdits composants de fonctions de machine pour actionner lesdits composants de fonctions de machine en fonction dudit second programme de commande prédéterminé et desdites secondes données de temporisation sélectionnées; un terminal (60, 64) pour l'affichage de parties prédéterminées dudit premier et dudit second programmes de commande prédéterminés, pour l'affichage et l'entrée desdites premières et desdites secondes données de temporisation sélectionnées et pour l'affichage et l'entrée d'autres données de temporisation pour remplacer des parties choisies desdites premières et desdites secondes données de temporisation sélectionnées; et un dispositif de transmission bidirectionnelle (61) pour connecter sélectivement ledit terminal à l'un sélectionné desdits ordinateurs locaux ou à l'ordinateur de machine.

Fig.1

0 117 075

*Fig.2*

TERMINAL PORT    TAPE PORT

61    62

| COMMUNICATION INTERFACE | COMMUNICATION INTERFACE | 58 |

56

69

NON-VOLATILE MACHINE DATA STORAGE

CPU

54

50

UNALTERABLE PROGRAM STORAGE

52

NON-VOLATILE TIMING DATA STORAGE

12

VALVE BLOCK

16

TIMING PULSE GENERATOR

INDIVIDUAL    SECTION    18

CONTROL PANEL    67

CONTROL PANEL    68

2

Fig. 3

TIMING GROUP | DATA GROUP | MENU GROUP

1 X INTRCEP 123
214

| EVENT RESET | 1 | 2 | 3 |
| ON OFF | 4 | 5 | 6 |
| JOG UP | 7 | 8 | 9 |
| JOG DOWN | CLEAR | 0 | ENTER |
| NEW SETTING | DO | NEXT | PRE-VIOUS |

Fig. 4

12 1 X INTRCEP 123 214

| EVENT RESET | CLEAR | ENTER | | DO | UP |
| ON OFF | 1 | 2 | 3 | N E X T | |
| JOG UP | 4 | 5 | 6 | | |
| JOG DOWN | 7 | 8 | 9 | P R E V I O U S | |
| NEW SETTING | 0 | • | | | DOWN |

0 117 075

Fig.5

Fig. 6

0 117 075

# Fig.7

SECTION
START BUTTON

SECTION
START BUTTON

BLANK SIDE
PANEL

67

COLD
BLANK

SWAB

ALT
STOP

WARE REJECT
BUTTONS

FINISH
MEASUREMENT

224

VALVE BLOCK
PANEL

MAINTENANCE
STOP

SECTION
STOP

DELIVERY

BLOWHEAD ADJUST

MAINTENANCE STOP

68

BLOW SIDE
PANEL

DELIVERY
STOP

COLD
MOLD

NECKRING
CHANGE

WARE REJECT
(CONTINUOUS & SWAB)

6